# EUROPEAN PATENT APPLICATION

(11) **EP 1 176 701 A2**
(43) Date of publication of application: **30.01.2002**
(21) Application number: 01103347.9
(22) Date of filing: 13.02.2001
(51) Int. Cl.: H02K 21/30

(54) **Single-phase multi-polar magnet type generator for vehicles**

(30) Priority: 22.02.2000 JP 2000044132; 20.12.2000 US 742751
(71) Applicant: Kabushiki Kaisha MORIC, Shizuoka-ken (JP)
(72) Inventor: Anma, Tatsuya, Shuuchi-gun, Shizuoka-ken (JP); Takahashi, Hideaki, Shuuchi-gun, Shizuoka-ken (JP)
(74) Representative: Leson, Thomas Johannes Alois, Dipl.-Ing.

(57) **Abstract**

A rotating electrical machine such as an electrical generator that can be utilized to provide high efficiencies and high outputs in connection with a compact construction. This achieved by having a plurality of spaced permanent magnets of opposite polarity that cooperate with armature coils. The permanent magnets are disposed in circumferentially spaced orientation relative to the axis of relative rotation at a magnet electrical angle θ that is in the range of 120° to 140°

## Description

### BACKGROUND OF THE INVENTION

This invention relates to a single-phase multi-polar magnetic type generator for vehicles and more particularly to an improved, compact and high output and efficiency generator of this type.

Many types of vehicles employ an engine driven generator for generating electrical power for both engine operation and also for powering accessories of the associated vehicle. Generally, these types of generator employ relatively rotatably permanent magnets and coil windings surrounding armatures. The relative rotation induces an electrical current in the windings, which is extracted and, due to its alternating current characteristics, rectified for use in powering the DC electrical components associated with the engine and/or vehicle. Generally, the permanent magnets rotate and the member carrying the armature windings is fixed, although other types of relationships are possible.

In connection with this type of device and in accordance with modern vehicle practice, the demands of the generator continue to increase. Thus, in order to provide greater power output, it is necessary to increase the size of the generator and, accordingly, this results in the necessity of increased power of from engine to drive the generator. In many of the vehicle applications, which such generating systems are employed, the vehicle is quite compact in nature, such as personal watercraft, motorcycles or the like. Thus, the increase in size of the generator is not acceptable.

In addition, if the generator grows in size and mass, then the engine that powers it must be similarly increased in output. This can result in the increase in emissions from the engine and can result in engine performance that is less than satisfactory due to the power consumed by the generator.

It is, therefore, a principal object to this invention to provide an improved and compact generator of this type.

It is a further object to this invention to provide an improved generator that has a compact construction and yet high efficiency and high power output.

The inventors hereof have discovered that the output ofthe generator is related specifically to the magnetization angle of one pole of the permanent magnet, as will be hereinafter defined. It has been found that the performance of the generator is significantly affected by this factor because of the non-linear sinusoidal output at the generator.

As will become apparent from the foregoing description, the permanent magnets generally are either formed on an annular member and may be adhesively affixed to it or may be formed by bonding an un-magnetized annular magnetic material to the rotor and thereafter magnetizing it so as to provide the alternating poles necessary to provide the circumferentially spaced magnetic poles. Post installation magnetization has not been preferred.

It has been discovered that there is a relationship between the magnetization angle, the angle occupied by a magnet with respect to the center of rotation of one pole of the permanent magnet and the output wave of the generator cause distortions which depend in magnitude on harmonic components contained within the output wave form. This is especially true in connection with harmonic components of the third harmonic or greater. This distortion in the output wave has been found to increase heat buildup and decrease efficiency of the generator.

Therefore, in accordance with this invention, the inventors have determined the optimum magnetic electrical angle ratio so as to achieve maximum power output with minimum power loss, heat generation and distortion.

### SUMMARY OF THE INVENTION

This invention is adapted to be embodied in a rotating machine having a permanent magnet having changing pluralities in a circumferential direction at regular intervals and a relatively rotatable, associated element have a plurality of armatures around which coil windings are formed. In accordance with the invention, the magnetization angle of the poles of the permanent magnet is set with respect to the rotational axis to be in an electrical range of 120° to 140°.

### BRIEF DESCRIPTION OF THE DRAWINGS

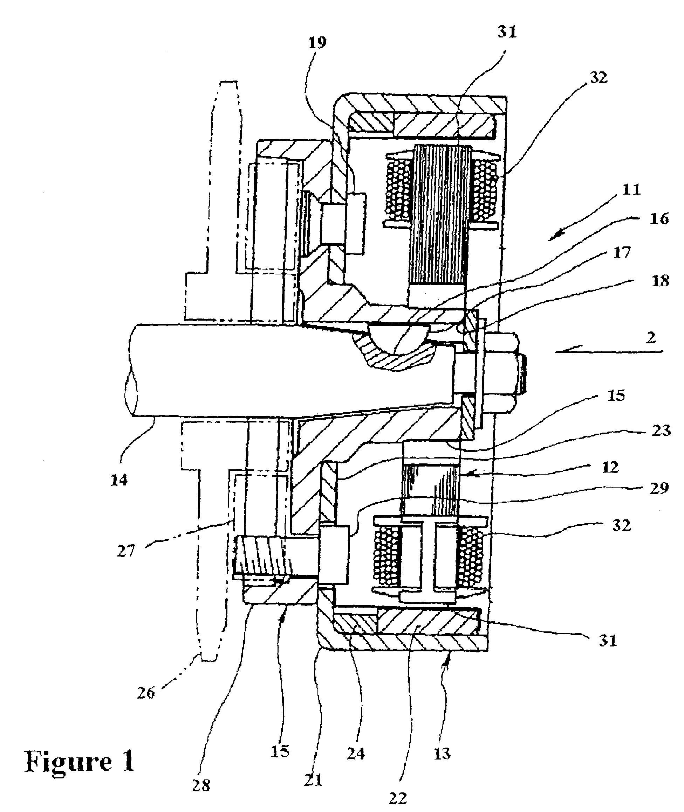

Fig. 1 is a cross-sectional view taken along the rotational axis of a rotating electrical machine constructed in accordance with an embodiment of the invention.

Fig. 2 is a view looking generally in the direction of the arrow 2 in Fig. 1 and shows the relationship of the armature cores to the permanent magnets.

Fig. 3 is a graphical view showing the relationship between the mechanical angle of the permanent magnet poles, the magnetic electrical angle and the electrical angle between the magnets as well as the harmonic variations in output.

Fig. 4 is a graphical view showing the actual variation in efficiency of the machine in accordance with the magnetic electrically angle.

### DETAILED DESCRIPTION OF THE PREFERRED EMBODIMENT OF THE INVENTION

Referring first to Figs I and 2 of the drawings, the reference numeral 11 indicates generally a rotating electrical machine constructed in accordance with an embodiment of the invention. In the illustrated embodiment, the machine 11 is comprised of a stator assembly, indicated generally by the reference numeral 12 and a rotor assembly, indicated generally by the reference numeral 13. In the illustrated embodiment, the machine 11 is an electrical generator but it is to be understood that the invention can be utilized with other types of rotating electrical machines and those wherein the permanent magnets are carried by the either the rotor and/or the stator.

The electrical machine 11 is particularly adapted to be utilized in conjunction with an internal combustion engine and, if acting as a generator, supplies an electrical power output from rotation of an engine output shaft, indicated by the reference numeral 14. The numeral 14 identifies an engine crankshaft of a small displacement engine that extends through a portion of the engine body and to which the electrical machine 11 is affixed in the manner, which will now be described.

The rotor 13 is comprised of a hub portion 15 that has an opening that receives one end of the crankshaft 14. A key way 16 is formed in the crankshaft 14 and receives a key 17 that has a spline connection to an internal bore 18 of the hub 15 so as to provide a non-rotational driving relationship there between.

The hub portion 15 is affixed, by means of a plurality of circumferentially spaced rivets 19 to a flywheel carrying ring member 21. This ring member 21 is formed with a plurality of circumferentially spaced magnets 22 which are formed in a manner which will be described and which, in the illustrated embodiment, comprise 6 having oppositely disposed and alternately placed poles so as to provide a total of 12 poles. The magnets 22 are held in spaced relationship to a radially extending inner wall 23 of the flywheel carrying ring member 21 by a spacer ring 24. If desired, a protective coating 25 may be formed on the inner surface of the flywheel carrying ring member 21 in surrounding relationship to the permanent magnets 22 so as to provide protection therefore.

A starter gear 26 is connected to the hub portion 15 by means of a one-way clutch 27 that includes a carrier 28 that is fixed to the hub portion 15 by threaded fasteners 29. A suitable electrical motor (not shown) is associated with the starter gear 26 for starting of the associated engine by rotating the crankshaft 14.

The stator assembly 12 includes a laminated ring having a plurality of teeth, which form armature poles 31. Individual coil windings 32 are formed around these poles 31 and are connected to a suitable external circuit for providing electrical output.

The stator 12 is made up of a plurality of laminated plates which are formed with an inner series of partially punched openings 33 and an outer series of partially punched openings 34, the latter being formed on the pole teeth 31. These partially punched openings 33 and 34 form holes and projections, which inter-fit with each other so as to line up the laminations in relationship to each other and to provide a mechanical coupling there between. Insulating sheets such as resinous material may be formed between the individual laminations. In addition, the stator 12 and specifically the hub portion thereof formed around a central opening 35 is provided with openings 36 for receiving threaded fasteners (not shown) that affix the stator 12 against rotation relative to a generator housing which is not shown, but which is affixed to the crankcase of the associated engine.

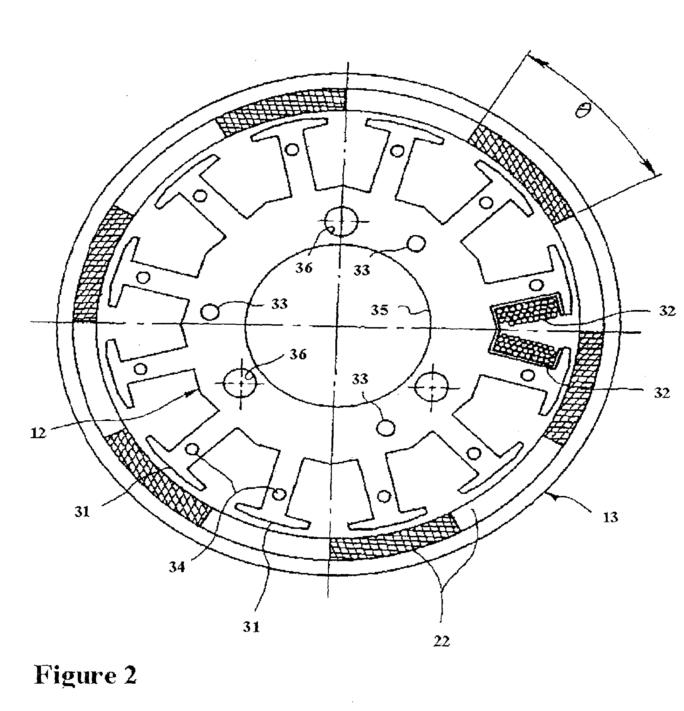

The rotor magnets 22 are formed from disk-like magnet material (ferrite, alnico, or the like) that is bonded fixedly to the flywheel member 21 on its inside circumferential surface. This ring is then magnetized at angular intervals of 30° (360° /12) by a magnetizer (not shown) such that 0°< θ ^{≤}30° where θ is the magnetization angle (mechanical angle), as seen in Fig. 2. The polarity of adjacent magnetized portions is reversed. Alternatively, magnets with magnetization angle θ =30° may be bonded at angular intervals of 30°.

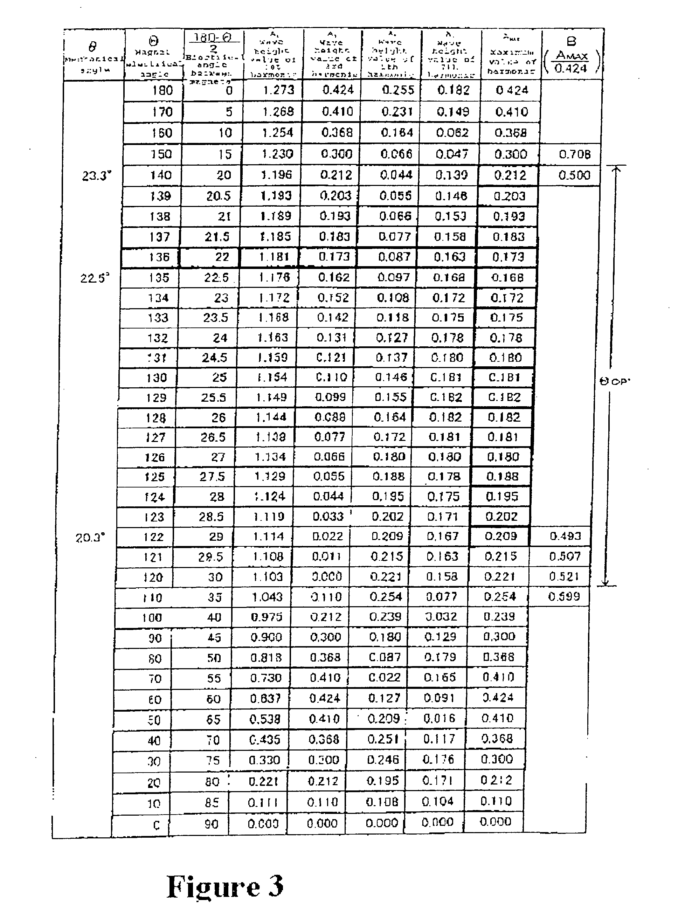

The magnet electrical angle Θ of one pole of the permanent magnet 22 and the magnitude of harmonic components of the output wave form, have been analyzed by computer simulation and the results are shown in Fig. 3. This shows the maximum values (amplitude) of harmonic components A1, A5, A7 of the 3rd, 5th and 7th harmonics, respectively. This was obtained as a result of Fourier analysis of the output waveform.

Fig. 3 shows the fundamental component A1, but it has a period of 360° in electrical angle Θ and thus need not be considered here. The harmonic components of even order such as the 2nd, 4th and 8th harmonics need not be considered because of positive and negative components of these harmonics are cancelled in the single-phase output.

The magnet electrical angle Θ used here has the following relation to the mechanical angle θ of a given magnetic pole. It is assumed that the frequency of the electromotive force is f; an alternate voltage of p cycles is generated if a rotor with 2p poles makes one revolution. The length of time a magnetic pole travels two pole pitches, is equivalent to the length of time the electromotive force (output voltage) completes one cycle.

That is, the mechanical angle of 2 π /p corresponding to the two pole pitches corresponds to the electrical angle (magnet electrical angle) of 2 π. Thus, p θ = Θ. "The electrical angle between magnets" in Fig. 3 is an angle of an unmagnetized portion or a gap produced between adjacent permanent magnets 22 as the mechanical angle θ of the permanent magnet 22 becomes small, and it is represented as (180-Θ)/2.

As a result of the analysis, the amplitude (wave height) of the 3rd, 5th and 7th harmonic components is compared; the largest component is determined as a maximum value Aₘₐₓ of the harmonics. Also, taking as a reference the maximum value Aₘₐₓ (0.424) of the harmonics at the electrical angle of Θ=180°, the ratio B (B=Aₘₐₓ/0.424) of the maximum value to the reference 0.424 is determined.

From this it has been found that a range Θopt of the electrical angle θ is optimum in which the ratio B is smaller than about 0.5. That is, it is verified that if the magnet electrical angle Θ is set within this range Θ opt, the distortion of the output waveform due to harmonic components is smaller, the waveform is smoother, and thus efficiency of the generator is improved.

From Fig. 3, it can be seen that the range Θ opt of the electrical angle θ is preferably 122° < Θ <140° for the ratio B below 0.5. However, taking account of the ratio increasing sharply for the electrical angle Θ below 120° , it may be reasonable to consider that the optimum electrical angle range Θ opt includes the electrical angle up to Θ=120° which is the angle just before the commencement of the sharp increase.

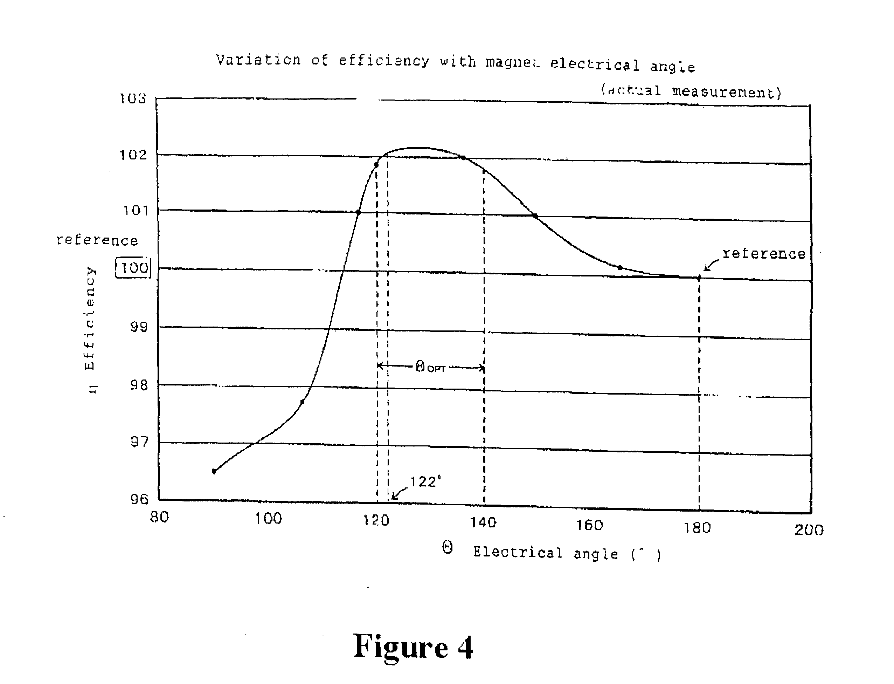

Therefore, the preferable electrical angle range Θ opt can be expanded as 120° < Θ < 140° . As a result, the magnet electrical angle range of 120-140° in that taking as a reference the maximum value of the harmonic components at the magnet electrical angle of 180°, a magnet electrical angle range is optimum in which this maximum value is approximately 50% or smaller of the reference as seen in Fig. 4, which shows actual measured values.

Thus, it should be apparent that the described embodiment of the invention provides a very compact yet high output and high efficient rotating electrical machine, which can be utilized, for example, as a generator in associated with small or medium displacement internal combustion engines. Of course, the invention is subject to other types of electrical machines without departing from the sprit and scope of the invention, as defined by the appended claims.

A rotating electrical machine such as an electrical generator that can be utilized to provide high efficiencies and high outputs in connection with a compact construction. This achieved by having a plurality of spaced permanent magnets of opposite polarity that cooperate with armature coils. The permanent magnets are disposed in circumferentially spaced orientation relative to the axis of relative rotation at a magnet electrical angle θ that is in the range of 120° to 140°

## Claims

1. A rotating machine having a plurality of permanent magnet having changing pluralities in a circumferential direction at regular intervals and a relatively rotatable associated element having a plurality of armatures around which coil windings are formed, the magnet electrical angle of the poles of the permanent magnets is set with respect to the rotational axis to be in an electrical range of 120° to 140°.

2. A rotating machine as set forth in claim I wherein the magnet electrical angle is equivalent to the length of time a magnetic pole travels two pole pitches which is equivalent to the length of time the electromotive force (voltage) completes one cycle.

3. A rotating machine as set forth in claim I wherein the machine comprises an electrical generator.

4. A rotating machine as set forth in claim 3 wherein the permanent magnets rotate and the coil windings are fixed against rotation.

5. A rotating machine as set forth in claim 4 wherein the magnet electrical angle is equivalent to the length of time a magnetic pole travels two pole pitches which is equivalent to the length of time the electromotive force (output voltage) completes one cycle
